# EUROPÄISCHE PATENTSCHRIFT

(11) **EP 1 724 091 B1**
(45) Veröffentlichungstag und Bekanntmachung des Hinweises auf die Patenterteilung: **01.10.2008**
(21) Anmeldenummer: 06004296.7
(22) Anmeldetag: 03.03.2006
(51) Int. Cl.: B29C 45/58

(54) **Vorrichtung zum Spritzegiessen von Formlingen**
Apparatus for injection moulding of shaped products
Appareil de moulage par injection d'objets formés

(30) Priorität: 20.05.2005 DE 102005023980
(43) Veröffentlichungstag der Anmeldung: 22.11.2006
(73) Patentinhaber: Potthoff, André, 58540 Meinerzhagen (DE)
(72) Erfinder: Potthoff, André, 58540 Meinerzhagen (DE)
(74) Vertreter: Köchling, Conrad-Joachim

(56) Entgegenhaltungen:
- WO-A-90/10529
- CH-A- 349 070
- US-A- 3 149 377
- PATENT ABSTRACTS OF JAPAN Bd. 017, Nr. 507 (M-1479), 13. September 1993 (1993-09-13) -& JP 05 131508 A (KUMI KASEI KK), 28. Mai 1993 (1993-05-28)

## Beschreibung

Die Erfindung betrifft eine Vorrichtung zum Spritzgießen von Formlingen aus plastifizierbarem Werkstoff, bestehend aus einer Plastifiziereinheit mit Plastifizier-Zylinder und Plastifizier- und Einspritz-Schnecke sowie einer an den Zylinder angeschlossenen Düse zur Abgabe des plastifizierten Werkstoffes an eine Spritzgießform, wobei die Düse einen sich vom Innendurchmesser des Zylinders zum Abgabekanal der Düse verjüngenden kegeligen Übergang aufweist und in diesem Bereich ein Verdrängungskörper für die Schmelze begrenzt axial beweglich angeordnet ist, der die kegelige, der Form des kegeligen Übergangs zumindest etwa angepasste, vordere Spitze aufweist, wobei die kegelige vordere Spitze des Verdrängungskörpers außen liegend nach außen zur Wandung des kegeligen Übergangs hin offene sowie endseitig offene Kanäle aufweist, die in einem flachen Winkel gegenüber der Zylinderlängsachse geneigt verlaufen, oder die Spitze andere Konturen, Erhebungen, Vertiefungen, Finnen oder Führungen aufweist, mittels derer der Verdrängungskörper zu Beginn des Einspritzvorschubs der Schnecke durch die Schmelze um seine Längsachse gedreht wird, wobei der Verdrängungskörper an seinem rückwärtigen, der Schnecke zugewandten Endbereich einen balligen Strömungskörper aufweist.

Aus der WO 90/10529 ist eine entsprechende Vorrichtung bekannt, bei der ein Verdrängungskörper in Form eines Torpedos zwischen der Schnecke und der Abgabedüse angeordnet ist.

Dieser Verdrängungskörper ist zylindrisch in Anpassung an den Plastifizierzylinder ausgebildet und durch die Zylinderform im Zylinder geführt, wobei die Enden kegelförmig verjüngt sind. Der Mantel des zylindrischen Teils des Torpedos weist Axialnuten auf, durch die die Schmelze von der Schnecke zur Abgabedüse hin transportiert wird.

Aus der EP 1060863 B1 ist eine Vorrichtung zum Spritzgießen von Formlingen bekannt, bei der ein stationärer Schmelzeverdrängungskörper vorgesehen ist. Bei bekannten Vorrichtungen dieser Art befindet sich das der Düse zugewandte Ende während des Dosiervorganges, bei dem mittels der Schmelze Kunststoffgranulat oder dergleichen plastifiziert wird, im vorderen Endbereich des Plastifizierzylinders. Während dieses Dosiervorgangs ist die Abgabedüse durch ein Element der Spritzgießmaschine verschlossen. Während einer Dekompressionsphase wird die Schnecke zurückgezogen. Anschließend wird die Schnecke im Spritzhub vorwärts bewegt, wodurch das plastifizierte Kunststoffmaterial, welches sich zwischen Schnecke und Düse befindet, aus der Düse ausgetrieben wird, die dann von dem entsprechenden maschinenseitig vorgesehenen Verschlusselement freigegeben ist.

Eine weitere, dem Oberbegriff des Anspruchs 1 gattungsgleiche, Vorrichtung ist aus der JP-A-05131508 bekannt.

Bei bekannten Einrichtungen besteht das Problem, dass in der kegeligen Höhlung vor allem am Kegelmantel innen liegend Massereste am Innenmantel des Kegels haften bleiben, wobei dieses anhaftende Material festbrennt und sich zersetzt. Beim Spritzvorgang lösen sich ab und zu Partikel der immer dicker werdenden anhaftenden Materialschicht ab. Diese werden mit dem Materialstrom mitgerissen und führen zu fehlerhaften Teilen, insbesondere dann, wenn es sich um glasklare Teile handelt. Zu solchen Materialzersetzungen neigt insbesondere PVC aber auch andere Kunststoffarten.

Ausgehend von diesem Stand der Technik liegt der Erfindung die Aufgabe zu Grunde, eine Vorrichtung zu schaffen, bei der Ablagerungen am kegeligen Übergang verhindert und vermieden werden.

Diese Aufgabe wird durch die Merkmale des Anspruchs 1 gelößt.

Zur Lösung der Aufgabe schlägt die Erfindung vor, dass die Schneckenspitze einen mittig abgehenden Schmelzeaustrittskanal aufweist, in den bei in Spritzposition befindlichen Teilen die Spitze des Strömungskörpers eingetaucht ist.

Bei der üblichen Betriebsweise solcher Vorrichtungen wird hierdurch erreicht, dass dann, wenn die Schnecke im Spritzhub bewegt wird, der Verdrängungskörper nach vorn in Richtung auf die Düse bewegt wird und sich mit Bestandteilen am Innenmantel des kegeligen Übergangs anlegt. Hierdurch wird im Bereich der zwischen Verdrängungskörper und dem kegeligen Übergang befindlichen Kanäle über dergleichen eine hohe Strömungsgeschwindigkeit erreicht, so dass das Absetzten von Materialresten weitgehend unterbunden ist. Dadurch, dass die Kanäle im Bereich der Spitze des Verdrängungskörpers oder die anderen Konturen, Erhebungen, Vertiefungen, Finnen oder Führungen in einem flachen Winkel gegenüber der Schmelzeströmungsrichtung geneigt verlaufen, wird erreicht, dass im Spritzhub der Verdrängungskörper nicht nur axial nach vorn in Richtung auf die Düse bewegt wird, bis seine kegelige vordere Spitze im Bereich des kegeligen Übergangs sitzt, sondern der Verdrängungskörper wird auch in ausreichendem Maße um seine Längsachse gedreht, so dass bei jedem Spritzvorgang die Kanäle oder dergleichen Konturen in einer anderen Position des kegeligen Übergangs zur Anlage kommen als in der vorhergehenden Spritzposition. Hierdurch wird in zunehmendem Maße die Ansammlung von anhaftendem Material vermieden, anders als in dem Fall, wenn der Verdrängungskörper nicht um seine Längsachse gedreht würde, da in diesem Falle der Verdrängungskörper jeweils an der gleichen Position mit entsprechenden Bestandteilen an dem kegeligen Übergang zur Anlage käme, was zum Aufbau von anhaftenden Materialpartikeln und Materialschichten in diesem Bereich führen würde.

Besonders bevorzugt ist dabei vorgesehen, dass die kegelige vordere Spitze des Verdrängungskörpers zur Bildung der Kanäle außenseitig abragende Flügel aufweist, die in Längsrichtung um einen geringen Winkelgrad gegenüber der Zylinderlängsachse angestellt sind.

Hierbei ist bevorzugt, dass die Flügel um etwa 5° bis 9° gegenüber der Längsachse angestellt sind.

Besonders bevorzugt ist vorgesehen, dass die Flügel um etwa 7° gegenüber der Längsachse angestellt sind.

Der erfindungsgemäße Verdrängungskörper weist anders als im eingangs bezeichneten Stand der Technik keine zylindrischen Führungsflächen auf, mit denen er im Plastifizierzylinder geführt werden könnte, sondern der Verdrängungskörper weist lediglich die kegelige Spitze nach vorne hin und ebenso eine Verjüngung nach hinten hin auf. Da diese Ausbildung eine sichere Positionierung und lagerichtige Anordnung innerhalb des Plastifizierzylinders nicht zwingend erreichbar macht, sieht die Erfindung vor, dass zwischen dem Zylinder und der Düse ein Profilring ausgebildet oder fixiert ist, der bündig an den Innenmantel des Zylinders und den kegeligen Übergang der Düse anschließt und der eine den Querschnitt einengende Ringwulst aufweist, die einen Wegbegrenzungsanschlag für den Verdrängungskörper bildet, so dass dieser in der Einspritzstellung mit seinem kegeligen vorderen Ende an dem kegeligen Übergang der Düse anliegt und mit einer rückwärtigen Anschlagfläche Abstand von der Ringwulst aufweist, sowie in der Nicht-Einspritzstellung mit der rückwärtigen Anschlagfläche an der Ringwulst anliegt und das kegelige vordere Ende mit Abstand von dem kegeligen Übergang der Düse positioniert ist.

Durch diesen Profilring, insbesondere dessen Ringwulst, ist ein Wegbegrenzungsanschlag für den Verdrängungskörper gebildet, so dass dieser sich in Richtung auf die Schnecke lediglich so weit bewegen kann, bis der Verdrängungskörper an den Wegbegrenzungsanschlag in Form der Ringwulst angelegt ist, wobei in Richtung auf die Düse der Weg durch den kegeligen Übergang begrenzt ist. Durch diese Anordnung wird nicht nur eine wegbegrenzung für den Verdrängungskörper geschaffen, sondern es wird auch verhindert, dass der Verdrängungskörper sich in eine unerwünschte Schieflage verstellen kann.

Vorzugsweise ist dabei vorgesehen, dass die rückwärtige Anschlagfläche des Verdrängungskörpers durch eine Einschnürung gebildet ist.

Hierdurch wird ebenso durch die später noch beschriebenen Maßnahmen ein ungestörter Schmelzefluss erreicht. Um den Schmelzefluss noch zu verbessern und insbesondere auch das Anhaften von Material am Verdrängungskörper (am rückwärtigen Bereich) zu verhindern, ist vorgesehen, dass der Verdrängungskörper an seinem rückwärtigen, der Schnecke zugewandten Endbereich einen balligen Strömungskörper aufweist.

Des Weiteren ist zu diesem Zwecke vorgesehen, dass der Strömungskörper eine zur Schnecke vorragende Spitze aufweist.

Eine besonders bevorzugte Ausbildung wird darin gesehen, dass der Strömungskörper eine von der Spitze abgehende konkav eingefallene ballige Form aufweist.

Es hat sich herausgestellt, dass durch diese Formgebung ein gleichmäßiger Schmelzefluss erreicht wird, ohne dass Anbackungen oder dergleichen am Verdrängungskörper erfolgen. Zudem ist vorzugsweise vorgesehen, dass die Schneckenspitze einen mittig abgehenden Schmelzeaustrittskanal aufweist, in den bei in Spritzposition befindlichen Teilen die Spitze des Strömungskörpers eingetaucht ist. Auch diese Maßnahme dient dazu, den Schmelzefluss in der Weise zu beeinflussen, dass Anbackungen am Verdrängungskörper vermieden sind.

Ein Ausführungsbeispiel der Erfindung ist in der Zeichnung dargestellt und im Folgenden näher beschrieben.
Es zeigt:
- Figur 1: eine erfindungsgemäße Vorrichtung teilweise im Mittellängsschnitt gesehen in einer Position, die dem Dosiervorgang entspricht;
- Figur 2: desgleichen in einer Position, die dem Spritzhub der Schnecke entspricht;

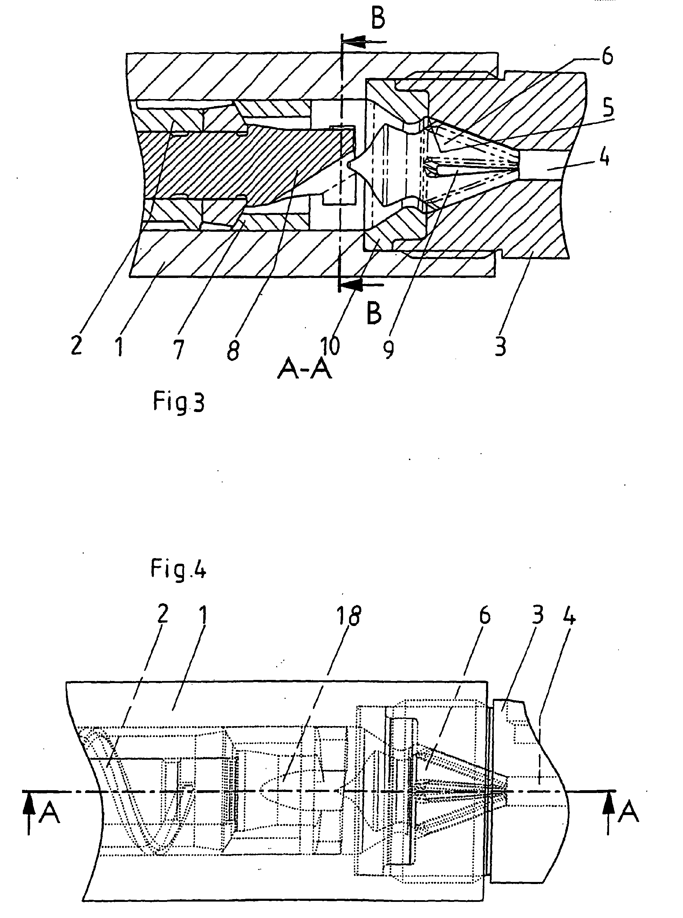

- Figur 3: eine Darstellung analog Figur 2 gesehen, im Schnitt A-A der Figur 4 gesehen;
- Figur 4: desgleichen in Seitenansicht gesehen;

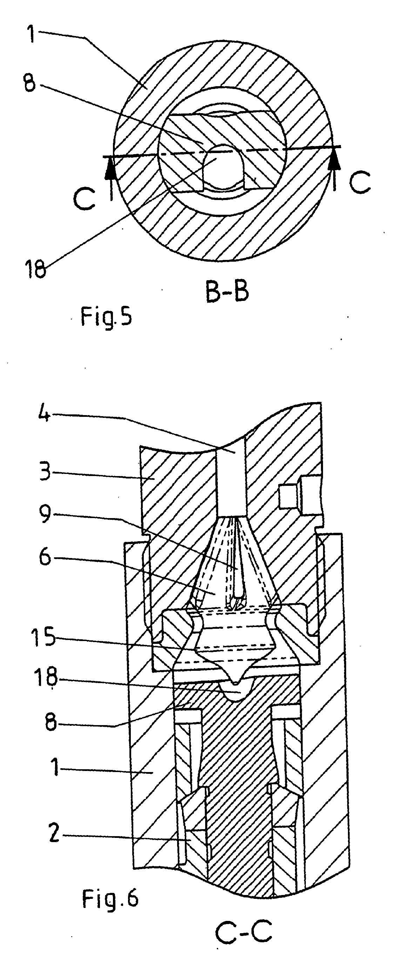

- Figur 5: desgleichen im Schnitt B-B der Figur 3 gesehen;
- Figur 6: desgleichen im Schnitt C-C der Figur 5 gesehen;

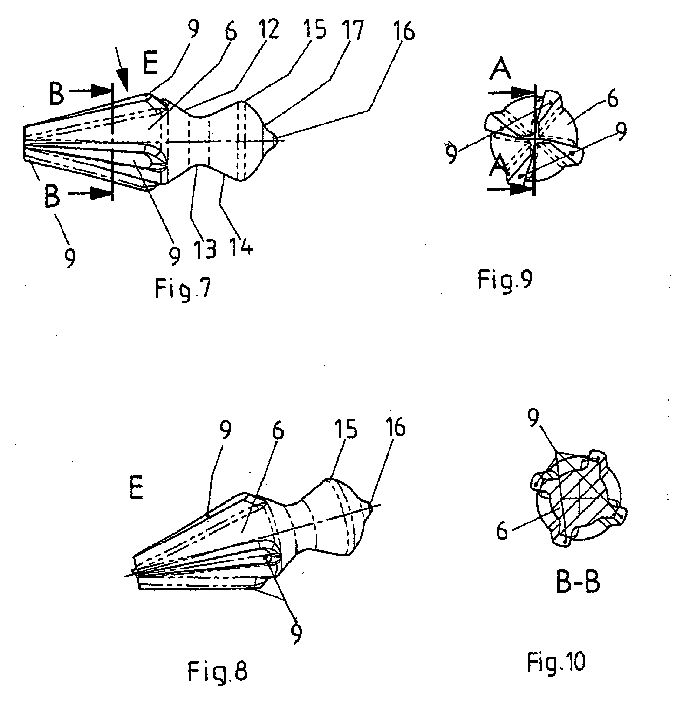

- Figur 7: eine Einzelheit in Ansicht;
- Figur 8: die Einzelheit in Blickrichtung des Pfeiles E der Figur 7 gesehen;
- Figur 9: eine Ansicht des Teiles gemäß Figur 7 von links gesehen;
- Figur 10: desgleichen im Schnitt B-B der Figur 7 gesehen;

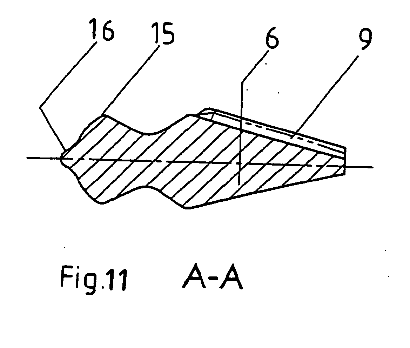

- Figur 11: desgleichen im Schnitt A-A der Figur 9 gesehen;

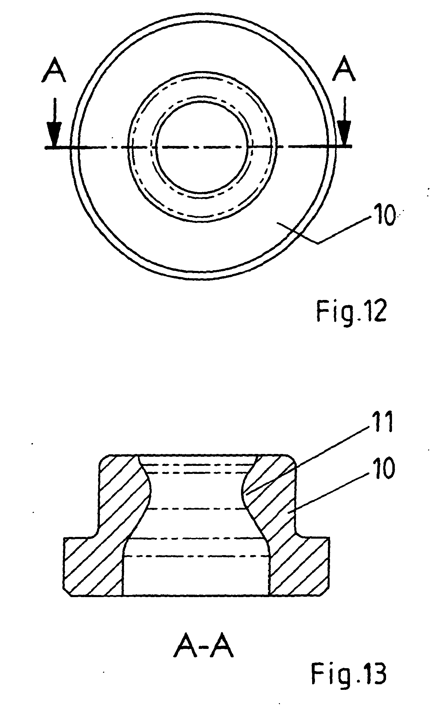

- Figur 12: eine weitere Einzelheit in Ansicht;
- Figur 13: die Einzelheit im Schnitt A-A der Figur 12 gesehen.

In der Zeichnung sind die für die Erfindung wesentlichen Teile einer Vorrichtung zum Spritzgießen von Formlingen aus plastifizierbarem Werkstoff, insbesondere Kunststoff gezeigt. Hierzu ist eine Plastifiziereinheit mit einem Plastifizierzylinder 1 und einer Plastifizier- und Einspritzschnecke 2 sowie einer an den Zylinder 1 angeschlossenen Düse 3 zur Abgabe des plastifizierten Werkstoffes an eine Spritzgießform gezeigt. Die Düse 3 weist einen sich vom Innendurchmesser des Zylinders 1 zum Abgabekanal 4 der Düse verjüngenden kegeligen Übergang 5 auf. In diesem Bereich ist ein Verdrängungskörper 6 für die Schmelze begrenzt axial beweglich angeordnet. Dieser Verdrängungskörper 6 weist eine kegelige, der Form des kegeligen Übergangs 5 zumindest etwa angepasste vordere Spitze auf. Des Weiteren ist im Zylinder 1 noch ein Sperrring 7 angeordnet, der die Schneckenspitze 8 um einen Teil ihrer Länge umgibt.

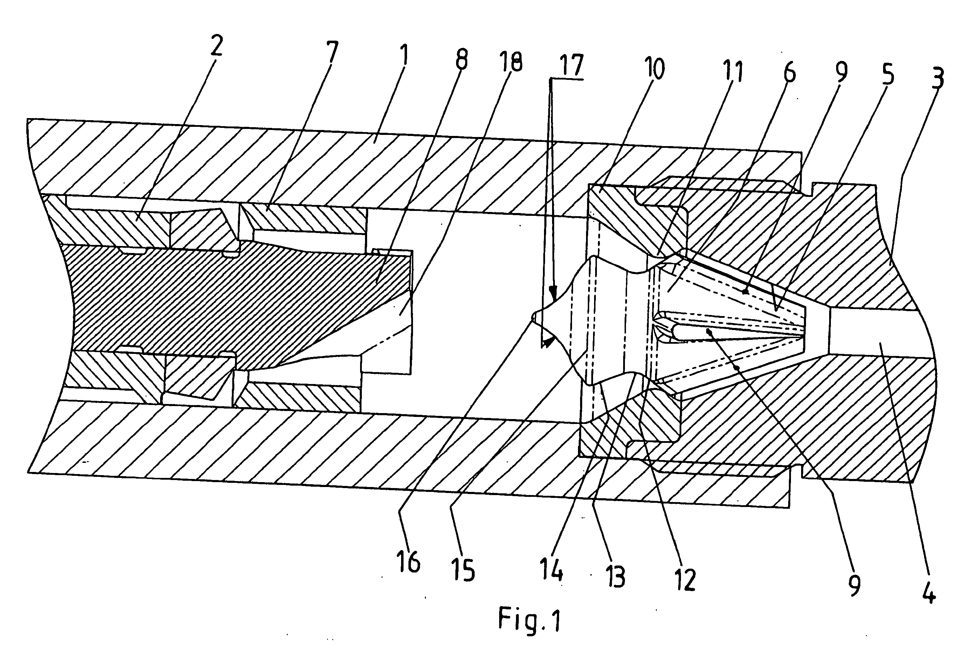

In Figur 1 ist eine Position gezeigt, die dem Dosiervorgang entspricht. In dieser Position wird beispielsweise Granulat mittels der Schnecke 2 plastifiziert und über einen Spalt zwischen Schnecke 2, Innenmantel des Zylinders 1 und Sperrring 7 nach vorn in Richtung auf die Abgabedüse 4 gefördert. Dabei befindet sich anders als in der Zeichnung dargestellt der Verdrängungskörper 6 nach vorn verlagert, so dass seine kegelige Spitze im Bereich des kegeligen Übergangs 5 anliegt. Der Abgabekanal 4 wird bei diesem Dosiervorgang durch Maschinenelemente verschlossen. Anschließend erfolgt eine Dekompression, bei der die Schnecke in die Position zurückbewegt wird, die in Figur 1 gezeigt ist.

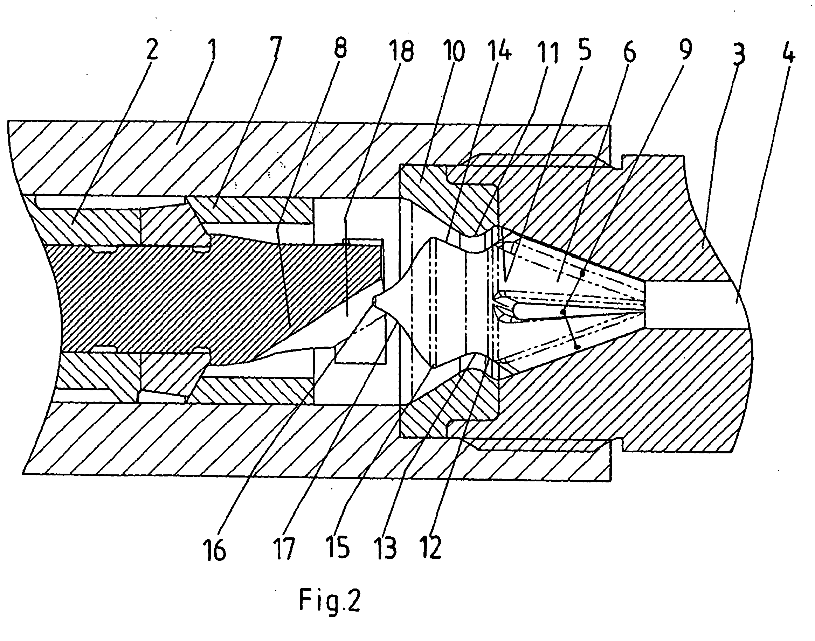

Hierbei hebt der Verdrängungskörper 6 mit seiner kegeligen Spitze von dem kegeligen Übergangsbereich 5 ab. Nachfolgend erfolgt dann der Spritzhub, der in Figur 2 gezeigt ist. Hierbei wird die Schnecke nach vorn geschoben und der Sperrring 7 setzt sich dichtend an einer Stirnfläche der Schnecke ab, so dass ein Materialzurückfluss vermieden ist. Das zwischen Schneckenende und Abgabeöffnung 4 befindliche Material wird nach vorn gepresst und um den Verdrängungskörper 6 herum in den Abgabekanal 4 gepresst, dessen Ausgang zur Maschinenseite freigegeben ist, so dass die Kavität des entsprechenden Formwerkzeuges mit Kunststoff gefüllt werden kann.

Um zu vermeiden, dass der Verdrängungskörper 6 jeweils wieder die selbe Position einnimmt, wenn der Spritzhub ausgeführt wird, weist die kegelige vordere Spitze des Verdrängungskörpers 6 außen liegend zur Wandung des kegeligen Übergangs 5 hin offene und endseitig offene Kanäle auf, die in einem flachen Winkel gegenüber der Schmelzeströmungsrichtung (Mittelachse des Zylinders 1) geneigt verlaufen oder die Spitze weist andere Konturen, Erhebungen, Vertiefungen, Finnen oder Führungen auf, mittels derer der Verdrängungskörper 6 zu Beginn des Einspritzvorschubes der Schnecke 2 durch die Schmelze nicht nur axial nach vorn bewegt, sondern auch um seine Längsachse gedreht wird. Insbesondere wird dies dadurch erreicht, dass die kegelige vordere Spitze des Verdrängungskörpers 6 zur Bildung solcher Kanäle oder Konturen außenseitig abragende, in Längsrichtung gerichtete Flügel 9 aufweist, die in Längsrichtung nicht parallel zur Mittellängsachse des Zylinders 1 ausgerichtet, sondern um einen geringen Winkelgrad gegenüber der Längsachse angestellt sind. Konkret sind im Ausführungsbeispiel die Flügel um etwa 7° gegenüber der Längsachse des Zylinders 1 geneigt angestellt. Die Flügel sind dabei so geformt, dass ihr der Schnecke 2 zugewandtes Ende gerundet und etwas weiter ausgebildet ist als die zum Vorderende des Verdrängungskörpers sich verjüngende Spitze. Hierdurch wird erreicht, dass sich der Verdrängungskörper beim Einspritzhub geringfügig gegen den Übergang 5 verdreht, so dass die Flügelrandkanten an einer anderen Stelle des kegeligen Überganges 5 anliegen als in der vorigen Position. Hierdurch werden Anbackungen vermieden, weil die Flügelkanten ständig an einer anderen Stelle des Bereiches 5 liegen. Im Ausführungsbeispiel sind vier Flügel 9 in gleichmäßigem Abstand voneinander vorgesehen.

Zwischen dem Zylinder 1 und der Düse 3 ist zudem ein Profilring 10 angeordnet, im Ausführungsbeispiel eingespannt, der bündig an den Innenmantel des Zylinders 1 anschließt und ebenso an den kegeligen Übergang 5. Dieser Profilring 10 weist eine seinen Querschnitt einengende Ringwulst 11 auf, die einen Wegbegrenzungsanschlag für den Verdrängungskörper 6 bildet. Der Verdrängungskörper kann somit lediglich zwei Positionen einnehmen. In der Einspritzstellung liegt der Verdrängungskörper 6 mit seinem kegeligen vorderen Ende an dem kegeligen Übergang 5 der Düse 3 an und ist mit einer rückwärtigen Anschlagfläche 12 mit Abstand von der Ringwulst 11 angeordnet, wie insbesondere in Figur 2 ersichtlich ist. In der anderen Position liegt der Verdrängungskörper mit seiner rückwärtigen Anschlagfläche 12 an der Ringwulst 11 an, während das kegelige vordere Ende mit Abstand von dem kegeligen Übergang 5 der Düse 3 positioniert ist, wie in Figur 1 gezeigt ist. Der Verstellweg des Verdrängungskörpers 6 ist auf einige Millimeter begrenzt. Die Anschlagfläche 12 und ebenso die Kontaktfläche der Ringwulst 11 ist etwa kegelig geformt, um eine Mittelzentrierung der Teile zueinander zur erreichen, wenn der Verdrängungskörper 6 sich bewegt. Des Weiteren weist der Verdrängungskörper 6 im Anschluss an die Anschlagfläche 12 eine Einschnürung 13 auf, an die wiederum eine kegelige Übergangsfläche 14 eines balligen Strömungskörpers 15 am rückwärtigen, der Schnecke 2 zugewandten Ende des Verdrängungskörpers 6 anschließt. Das freie Ende des rückwärtigen Endes weist eine zur Schnecke 2 hin vorragende zentrische Spitze 16 auf. Vorzugsweise ist die Fläche zwischen der Spitze 16 und dem maximalen Durchmesser des balligen Strömungskörpers 15 konkav einfallend ausgebildet (wie bei 17 angegeben). Im Ausführungsbeispiel weist die Schneckenspitze 8 beidseitig gegenüberliegende Abflachungen auf sowie einen mittig abgehenden Schmelzeaustrittskanal 18. In diesen taucht die Spitze 16 des Strömungskörpers 6 gegen Ende des Spritzhubes der Schnecke 2 ein, wie in Figur 2 veranschaulicht ist. Der Kegelwinkel der vorderen Spitze des Verdrängungskörpers 6 beträgt etwa 30°, während der Kegelwinkel im Bereich der Flächen 14 etwa 25° beträgt. Die Anschlagfläche 12 ist in einem Kegelwinkel von circa 33° angestellt.

Durch die erfindungsgemäße Ausbildung und Anordnung der Flügel 9, die eine Drehung des Verdrängungskörpers 6 um seine Längsachse bewirken und die besondere Kontur des rückwärtigen, etwa zwiebelförmigen Endes des Verdrängungskörpers 6 wird eine gleichmäßige, vorwiegend laminare Strömung des Kunststoffmaterials im Einspritzhub erreicht, so dass Anbackungen von Material weder am Verdrängungskörper 6 noch am Bereich des kegeligen Übergangs 5 auftreten.

## Patentansprüche

1. Vorrichtung zum Spritzgießen von Formlingen aus plastifizierbarem Werkstoff, bestehend aus einer Plastifiziereinheit mit Plastifizier-Zylinder (1) und Plastifizier- und Einspritz-Schnecke (2) sowie einer an den Zylinder (1) angeschlossenen Düse (3) zur Abgabe des plastifizierten Werkstoffes an eine Spritzgießform, wobei die Düse (3) einen sich vom Innendurchmesser des Zylinders zum Abgabekanal (4) der Düse (3) verjüngenden kegeligen Übergang (5) aufweist und in diesem Bereich ein Verdrängungskörper (6) für die Schmelze begrenzt axial beweglich angeordnet ist, der die kegelige, der Form des kegeligen Übergangs (5) zumindest etwa angepasste, vordere Spitze aufweist, wobei die kegelige vordere Spitze des Verdrängungskörpers (6) außen liegend nach außen zur Wandung des kegeligen Übergangs hin offene sowie endseitig offene Kanäle aufweist, die in einem flachen Winkel gegenüber der Zylinderlängsachse geneigt verlaufen, oder die Spitze andere Konturen, Erhebungen, Vertiefungen, Finnen oder Führungen aufweist, mittels derer der Verdrängungskörper (6) zu Beginn des Einspritzvorschubs der Schnecke (2) durch die Schmelze um seine Längsachse gedreht wird, **dadurch gekennzeichnet, dass** der Verdrängungskörper (6) an seinem rückwärtigen, der Schnecke (2) zugewandten Endbereich einen balligen Strömungskörper (15) aufweist, und die Schneckenspitze (8) einen mittig abgehenden Schmelzeaustrittskanal (18) aufweist, in den bei in Spritzposition befindlichen Teilen die Spitze (16) des Strömungskörpers (15) eingetaucht ist.

2. Vorrichtung nach Anspruch 1, **dadurch gekennzeichnet, dass** die kegelige vordere Spitze des Verdrängungskörpers (6) zur Bildung der Kanäle außenseitig abragende Flügel (9) aufweist, die in Längsrichtung um einen geringen Winkelgrad gegenüber der Zylinderlängsachse angestellt sind.

3. Vorrichtung nach Anspruch 2, **dadurch gekennzeichnet, dass** die Flügel (9) um 5° bis 9° gegenüber der Längsachse angestellt sind.

4. Vorrichtung nach Anspruch 4, **dadurch gekennzeichnet, dass** die Flügel (9) um 7° gegenüber der Längsachse angestellt sind.

5. Vorrichtung nach einem der Ansprüche 1 bis 4, **dadurch gekennzeichnet, dass** zwischen dem Zylinder (1) und der Düse (3) ein Profilring (10) ausgebildet oder fixiert ist, der bündig an den Innenmantel des Zylinders (1) und den kegeligen Übergang (5) der Düse (3) anschließt und der eine den Querschnitt einengende Ringwulst (11) aufweist, die einen Wegbegrenzungsanschlag für den Verdrängungskörper (6) bildet, so dass dieser in der Einspritzstellung mit seinem kegeligen vorderen Ende an dem kegeligen Übergang (5) der Düse (3) anliegt und mit einer rückwärtigen Anschlagfläche (12) Abstand von der Ringwulst (11) aufweist, sowie in der Nicht-Einspritzstellung mit der rückwärtigen Anschlagfläche (12) an der Ringwulst (11) anliegt und das kegelige vordere Ende mit Abstand von dem kegeligen Übergang (5) der Düse (3) positioniert ist.

6. Vorrichtung nach Anspruch 5, **dadurch gekennzeichnet, dass** die rückwärtige Anschlagfläche (12) des Verdrängungskörpers (6) durch eine Einschnürung (13) gebildet ist.

7. Vorrichtung nach einem der Ansprüche 1 bis 6, **dadurch gekennzeichnet, dass** der Strömungskörper (15) eine zur Schnecke (2) vorragende Spitze (16) aufweist.

8. Vorrichtung nach einem der Ansprüche 1 bis 7, **dadurch gekennzeichnet, dass** der Strömungskörper (15) eine von der Spitze (16) abgehende konkav eingefallene ballige Form (17) aufweist.

## Claims

1. Apparatus for injection moulding shaped bodies made of plasticisable material, consisting of a plasticising unit having a plasticising cylinder (1) and a plasticising and injection screw (2) and a nozzle (3) connected to the cylinder (1) for the delivery of the plasticised material to an injection mould, wherein the nozzle (3) comprises a conical transition (5) tapering from the internal diameter of the cylinder to the delivery duct (4) of the nozzle (3) and in this region there is disposed a displacement body (6) for the melt with limited axial mobility, which comprises the conical front tip that is adapted at least roughly to the shape of the conical transition (5),
wherein the conical front tip of the displacement body (6) externally comprises ducts that are open outwardly to the wall of the conical transition and are open at the end, which channels extend inclined at a flat angle in relation to the longitudinal axis of the cylinder, or the tip has different contours, raised portions, recesses, fins or guides, by means of which the displacement body (6) is rotated around its longitudinal axis at the start of the injection feed of the screw (2) through the melt,
**characterised in that** the displacement body (6) comprises a spherical flow body (15) at its rear end region facing the screw (2), and the screw tip (8) has a centrally branching melt discharge duct (18), into which the tip (16) of the flow body (15) is plunged when parts are located in the injection position.

2. Apparatus according to Claim 1,
**characterised in that** the conical front tip of the displacement body (6) comprises outwardly extending blades (9) to form the ducts, which blades in the longitudinal direction are angled by a small angular degree in relation to the longitudinal axis of the cylinder.

3. Apparatus according to Claim 2,
**characterised in that** the blades (9) are angled by 5° to 9° in relation to the longitudinal axis.

4. Apparatus according to Claim 4,
**characterised in that** the blades (9) are angled by 7° in relation to the longitudinal axis.

5. Apparatus according to one of Claims 1 to 4,
**characterised in that** between the cylinder (1) and the nozzle (3) there is constructed or fixed a profile ring (10), which lies flush against the inner shell of the cylinder (10) and the conical transition (5) of the nozzle (3) and which has an annular ring (11) restricting the cross section, which forms a displacement limiting stop for the displacement body (6) so that in the injection position said displacement body rests with its conical front end against the conical transition (5) of the nozzle (3) and with a rear stop surface (12) is spaced from the annular ring (11), and in the non-injection position lies with the rear stop surface (12) against the annular ring (11) and the conical front end is positioned spaced from the conical transition (5) of the nozzle (3).

6. Apparatus according to Claim 5,
**characterised in that** the rear stop surface (12) of the displacement body (6) is formed by a constriction (13).

7. Apparatus according to one of Claims 1 to 6,
**characterised in that the** flow body (15) has a tip (16) projecting to the screw (2).

8. Apparatus according to one of Claims 1 to 7,
**characterised in that** the flow body (15) has a spherical shape (17) with a concave recess emanating from the tip (16).

## Revendications

1. Dispositif de moulage, par injection, d'ébauches en un matériau plastifiable, comprenant une unité de plastification comportant un cylindre de plastification (1) et une vis sans fin (2) de plastification et d'injection, ainsi qu'une buse (3) raccordée au cylindre (1) pour délivrer le matériau plastifiable à un moule de coulée par injection, la buse (3) présentant une transition tronconique (5) se rétrécissant depuis le diamètre intérieur du cylindre jusqu'au canal de délivrance (4) de ladite buse (3), et cette région renfermant, avec mobilité axiale limitée, un corps de refoulement (6) destiné à la masse en fusion et muni de la pointe antérieure tronconique au moins sensiblement adaptée à la forme de la transition tronconique (5), la pointe antérieure tronconique du corps de refoulement (6), située à l'extérieur, étant pourvue de canaux ouverts aux extrémités et également ouverts vers l'extérieur, en direction de la paroi de la transition tronconique, qui s'étendent avec inclinaison d'un angle modeste vis-à-vis de l'axe longitudinal du cylindre, ou bien ladite pointe étant pourvue d'autres profils, protubérances, renfoncements, pannes ou guides au moyen desquel(le)s, au début de l'avance d'injection de la vis sans fin (2) à travers la masse en fusion, le corps de refoulement (6) est animé d'une rotation autour de son axe longitudinal, **caractérisé par le fait que** le corps de refoulement (6) possède, dans sa région extrême postérieure tournée vers la vis sans fin (2), un corps d'écoulement (15) de forme bombée ; et la pointe (8) de la vis sans fin comporte un canal (18) de sortie de la masse en fusion, bifurquant centralement, et dans lequel la pointe (16) du corps d'écoulement (15) est enfoncée lorsque les pièces occupent la position d'injection.

2. Dispositif selon la revendication 1, **caractérisé par le fait que** la pointe antérieure tronconique du corps de refoulement (6) présente, en vue de former les canaux, des ailettes (9) qui font saillie extérieurement et sont placées, dans le sens longitudinal, avec un faible degré d'inclinaison vis-à-vis de l'axe longitudinal du cylindre.

3. Dispositif selon la revendication 2, **caractérisé par le fait que** les ailettes (9) décrivent un angle de 5° à 9° vis-à-vis de l'axe longitudinal.

4. Dispositif selon la revendication 2, **caractérisé par le fait que** les ailettes (9) décrivent un angle de 7° vis-à-vis de l'axe longitudinal.

5. Dispositif selon l'une des revendications 1 à 4, **caractérisé par le fait qu'**une bague profilée (10), ménagée ou verrouillée à demeure entre le cylindre (1) et la buse (3), est située dans l'affleurement de l'enveloppe intérieure dudit cylindre (1) et de la transition tronconique (5) de ladite buse (3), et est dotée d'un bourrelet annulaire (11) qui rétrécit la section transversale et matérialise une butée limitatrice de courses, affectée au corps de refoulement (6), de sorte que, dans la position d'injection, ce dernier porte par son extrémité antérieure tronconique contre la transition tronconique (5) de la buse, et se trouve à distance du bourrelet annulaire (11) par une surface postérieure de butée (12) ; et que, dans la position de non-injection, ledit corps porte contre ledit bourrelet annulaire (11) par ladite surface postérieure de butée (12), et ladite extrémité antérieure tronconique est positionnée à distance de ladite transition tronconique (5) de ladite buse (3).

6. Dispositif selon la revendication 5, **caractérisé par le fait que** la surface postérieure de butée (12) du corps de refoulement (6) est formée par une zone resserrée (13).

7. Dispositif selon l'une des revendications 1 à 6, **caractérisé par le fait que** le corps d'écoulement (15) présente une pointe (16) saillant en direction de la vis sans fin (2).

8. Dispositif selon l'une des revendications 1 à 7, **caractérisé par le fait que** le corps d'écoulement (15) présente une forme bombée (17) partant de la pointe (16) et offrant un profil concave.
